# FASCICULE DE BREVET EUROPEEN

(11) **EP 3 645 445 B1**
(45) Date de publication et mention de la délivrance du brevet: **28.02.2024**
(21) Numéro de dépôt: 18762566.0
(22) Date de dépôt: 28.06.2018
(51) Int. Cl.: B66F 9/075, B66F 9/20, B66F 9/24, G05D 1/00, B60W 50/035

(54) **SYSTEME DE COMMANDE D'UN CHARIOT ELEVATEUR A FOURCHE AUTONOME, ET PROCEDE DE PILOTAGE D'UN TEL CHARIOT**
SYSTEM ZUR STEUERUNG EINES AUTONOMEN GABELSTAPLERS UND VERFAHREN ZUM STEUERN EINES SOLCHEN GABELSTAPLERS
SYSTEM FOR CONTROLLING AN AUTONOMOUS FORKLIFT TRUCK, AND METHOD FOR CONTROLLING SUCH A TRUCK

(30) Priorité: 29.06.2017 FR 1755998
(43) Date de publication de la demande: 06.05.2020
(73) Titulaire: Compagnie Générale des Etablissements Michelin, 63000 Clermont-Ferrand (FR)
(72) Inventeur: MODOLO, Ivan, 63040 Clermont-Ferrand Cedex 9 (FR)
(74) Mandataire: M.F.P. Michelin
(86) Numéro de dépôt international: PCT/FR2018/051600
(87) Numéro de publication internationale: WO 2019/002783

(56) Documents cités:
- EP-A1- 1 138 868
- WO-A1-2013/033179
- WO-A1-2013/150244
- JP-A- 2000 185 534
- US-A- 5 469 356
- US-A1- 2014 240 117

## Description

### DOMAINE DE L'INVENTION

L'invention concerne un système de commande pour chariot élévateur à fourche autonome, et un procédé de pilotage d'un tel chariot. De manière plus précise, l'invention concerne un système de commande pour un chariot élévateur à fourche normalement prévu pour fonctionner en mode manuel.

Un chariot élévateur manuel est conçu pour être conduit par un cariste disposant d'un permis adapté. En effet, la conduite et le maniement d'un tel véhicule, et de ses différents accessoires, nécessite une formation spécifique. Le conducteur apprend ainsi à manier le véhicule, à utiliser les fourches pour le transport de matériel, et à respecter toutes les règles de sécurité afférentes à l'environnement dans lequel il évolue.

Pour remédier à ces inconvénients, des chariots élévateurs entièrement autonomes sont apparus sur le marché. Ces chariots, destinés au transport de marchandise en toute autonomie, sont relativement coûteux, et n'offrent qu'une possibilité d'utilisation en mode autonome, ce qui peut s'avérer limitant pour certaines utilisations.

On connaît également, de la demande WO2013/150244, des véhicules habituellement prévus pour fonctionner en mode manuel, et qui sont adaptés pour permettre un deuxième mode de fonctionnement en mode automatique. Ainsi, il devient possible de réaliser de nombreux services tels que un service de voiturier, un service de parking ... Toutefois, ce document ne concerne que des véhicules de tourisme, et ne prend pas en compte les particularités d'un chariot élévateur à fourche, et d'un environnement d'évolution tel qu'une usine.
De manière similaire, le document US 5 469 356 décrit un système de commande d'un véhicule de génie civil permettant un mode de fonctionnement manuel et un mode de fonctionnement en automatique de celui-ci.
Le document US 2014/240117 décrit un système de commande pour une pince de manipulation de charges pour un chariot élévateur. Il ne décrit pas de système de commande du chariot.
Le document WO 2013/033179 décrit un système de commande d'un chariot élévateur comportant un système de navigation et une interface de commande permettant au chariot de fonctionner en mode manuel ou en mode automatique.

En outre, un chariot élévateur présente la particularité d'être équipé d'une direction hydraulique, permettant un pilotage du pivotement des roues directement depuis le volant. Dans le cadre de l'autonomisation d'un chariot élévateur, il convient donc de s'intéresser également à cet aspect.

La présente invention vise donc à proposer un système de commande pour chariot élévateur qui permette de répondre aux éléments précédemment mentionnés. En préambule, on précise ici que les termes « chariot », « chariot élévateur » et « chariot élévateur à fourche » seront indifféremment utilisés dans ce texte, avec la même signification.

### BREVE DESCRIPTION DE L'INVENTION

Ainsi, l'invention concerne un système de commande d'un chariot élévateur, comportant :
- Des organes de commande humaine générant des signaux de pilotage manuel d'actionneurs du véhicule, ces organes comprenant une direction hydraulique,
- Un module de commande comprenant un sous-module de commande automatique générant des signaux de pilotage autonome à destination d'un ou plusieurs actionneurs du véhicule, en fonction des signaux de consigne Un module de commutation agencé pour sélectionner un ou des signaux de pilotage manuels et/ou manuels corrigés et/ou un ou des signaux de pilotage autonome,
- une vanne électrohydraulique permettant la transformation d'un signal de pilotage issu du module de commande sous-module de commande automatique en un signal à destination de la direction hydraulique,
   le système étant caractérisé en ce qu'il comprend en outre un régulateur d'asservissement de la vanne électrohydraulique comprenant un régulateur Proportionnel-Intégral, un régulateur Tout-Ou-Rien et des moyens d'activation de l'un ou l'autre des régulateurs PI et TOR en fonction d'un seuil de vitesse du chariot élévateur.

L'utilisation de deux régulateurs différents vise à réduire au minimum les temps mort d'asservissement en anticipant au maximum la commande.

En effet, chacun de ces régulateurs présente des avantages et des inconvénients, et on vise donc à optimiser la régulation en profitant des deux types de régulateurs :
- Un régulateur PI permet d'effectuer une régulation avec plus de précision, mais il et relativement lent, et ne peut donc pas être utilisé au-delà d'un certain seuil de vitesse. En effet, un régulateur PI induit un temps de retard qu'il est intéressant de pouvoir supprimer.
- Un régulateur TOR, quant à lui, offre une vitesse de réaction plus élevée, ce qui en fait un bon outil pour la régulation à haute vitesse.

En outre, le choix est fait entre un régulateur proportionnel (PI) et un régulateur tout-ou-rien (TOR) en fonction d'un seuil de vitesse du chariot. Dans un exemple préférentiel :
- A faible vitesse, par exemple en dessous d'un seuil de 2m/s, le régulateur proportionnel (PI) est sélectionné : on privilégie la précision de régulation, les gains sont adaptés pour un bon fonctionnement dans cette plage de vitesse,
- A haute vitesse, par exemple au-dessus du seuil de 2m/s, le régulateur tout-ou-rien (TOR) est sélectionné : la vitesse de réaction au changement de signe est privilégiée, ceci permet d'obtenir une meilleure précision d'asservissement à haute vitesse en réduisant au minimum les temps de retard de la boucle de commande.

Dans un mode de réalisation préférentiel, un système selon l'invention comprend en outre :
- Un module de détection de l'environnement du véhicule,
- Un module de navigation permettant de générer des signaux de consigne de pilotage en fonction d'une instruction reçue,
et dans lequel
- Le module de commande comprend un sous-module de commande assistée générant des signaux de pilotage manuels corrigés en fonction des signaux de pilotage manuels et des informations issues du module de détection et/ou des signaux de consigne de pilotage, et
le module de commutation est en outre agencé pour sélectionner des signaux manuels corrigés.

L'invention concerne également un chariot élévateur muni d'un système de commande selon l'invention. L'ensemble des caractéristiques qui seront ci-après décrites pourront donc concerner le système de commande seul, ou le chariot muni du système de commande.

Dans un mode de réalisation préférentiel, le module de commutation sélectionne les signaux de pilotage en fonction de quatre modes de fonctionnement :
- Un mode manuel dans lequel seuls les signaux manuels sont sélectionnés,
- Un mode tout-automatique dans lequel seuls les signaux autonomes sont sélectionnés,
- Un mode manuel à sécurisation assistée, dans lequel sont sélectionnés les signaux de pilotage manuels corrigés par les informations issues du module de détection,
- Un mode manuel à navigation assistée, dans lequel sont sélectionnés les signaux de pilotage manuel corrigés par les signaux de consigne de pilotage.

Avantageusement, ce module de commutation est actionné via un sélecteur installé sur le chariot élévateur. Ainsi, un système de commande selon l'invention permet, même dans le cas où un opérateur souhaiterait conduire lui-même le chariot, de profiter des équipements installés pour l'automatisation du chariot pour offrir une assistance à la conduite, et ainsi faciliter le travail de l'opérateur et renforcer la sécurité des déplacements du chariot.

Dans un mode de réalisation préférentiel, le module de commutation permet également de choisir un mode maintenance, dans lequel l'ensemble des éléments du système de commande, à l'exception des organes à commande humaine, sont désactivés, notamment par une déconnexion physique. Ceci permet, par exemple, à un fabricant initial du chariot élévateur manuel de pouvoir intervenir pour des actions de maintenance, sans être gêné par les éléments additionnels du système de commande.

Dans un autre mode de réalisation préférentiel, le module de navigation comprend un ou plusieurs des éléments suivants :
- Des moyens de géolocalisation, permettant de connaître en temps réel la position du chariot élévateur,
- Des moyens de télécommunications en émission, permettant par exemple de transmettre les informations de géolocalisation à un système de gestion générale, afin qu'un superviseur connaisse à chaque instant la position de différents chariots dans une usine.
- Des moyens de télécommunications en réception, permettant de recevoir des consignes concernant un trajet à parcourir, ou des actions à effectuer comme par exemple une action d'aller chercher du matériel à un point A pour le décharger ensuite à un point B. Partant de ces éléments reçus, le module de navigation peut alors générer des signaux de consigne de pilotage. Ces signaux de consigne comprennent avantageusement un ou plusieurs consignes parmi : une consigne de vitesse, une consigne d'angle de rotation des roues du chariot, une consigne d'élévation des fourches, une consigne d'angle d'inclinaison des fourches, une consigne d'écartement des fourches.

Ainsi que précédemment indiqué, les signaux de pilotage qui seront effectivement transmis aux actionneurs sont déterminés en fonction de ces signaux de consigne, déterminé par le module de navigation, mais également en tenant compte de paramètres additionnels issu sur module de détection.

Ainsi, dans un premier exemple de réalisation, le module de détection de l'environnement comprend un sous-module de gestion des fourches, comprend :
- Des capteurs de détection de la présence de chargement sur les fourches,
- Des capteurs de position des fourches.

Selon l'état des fourches (levée ou baissée, pleine ou vide), les signaux de pilotage varieront. En effet, par exemple, un chariot élévateur dont les fourches sont chargées ne peut pas circuler à la même vitesse qu'un chariot à vide. De la même façon, un chariot élévateur dont les fourches sont en position haute ne peut pas circuler à la même vitesse ou prendre les mêmes angles, qu'un chariot dont les fourches sont en position basse. Ces éléments issus du module de détection permettent alors de corriger les signaux de consigne pour les rendre compatibles aux exigences de sécurité pour l'environnement du chariot.

Dans un autre mode de réalisation, le sous-module de gestion des fourches comprend des moyens pour détecter une incohérence au niveau du chargement des fourches, et pour émettre un signal d'arrêt en cas d'incohérence. En effet, si le sous-module de gestion des fourches détecte une chute des objets chargés sur les fourches, ou un mauvais centrage de ces objets, il est nécessaire d'arrêter aussitôt le déplacement du chariot, afin d'éviter des accidents. Dans ce cas, le signal d'arrêt est alors transmis aux modules de commande pour qu'il génère des signaux de pilotage correspondant, à savoir des signaux de pilotage d'arrêt d'urgence.

Dans un autre exemple de réalisation, le module de détection de l'environnement comprend un sous-module de détection des zones de protection, comprenant au moins un laser permettant de détecter la présence d'un obstacle dans une zone environnant le véhicule.

En effet, un chariot élévateur évolue dans un environnement contraint tel qu'une usine ou un entrepôt de stockage, et il doit donc prendre en compte les différents obstacles, matériels ou humains, afin d'éviter tout collision qui pourrait endommager le matériel et mettre en danger les opérateurs travaillant dans l'environnement du chariot. Ces éléments permettent alors, comme précédemment, de corriger les signaux de consigne pour tenir compte de l'environnement.

De la même façon, les organes de commande humaine sont ceux généralement installés sur des chariots élévateurs du commerce, et compris dans le groupe comprenant : une pédale d'accélérateur, une pédale de frein, un volant, un sélecteur de sens de marche du véhicule, une manette de commande de l'élévation, de l'inclinaison et de l'écartement des fourches.

Grâce à l'ensemble des éléments de ce système de commande, un chariot élévateur selon l'invention peut se déplacer sur sol dégradé ou irrégulier sans problème pour le transport de palettes et de bobines, à des vitesses atteignant 4m/s. En effet, la présence des systèmes de sécurité, par le biais du module de détection de l'environnement, permet d'augmenter la vitesse sans risque pour l'entourage du chariot, puisqu'on sait qu'en cas de problème les systèmes de sécurité se mettront en fonctionnement. Un tel chariot permet donc de gagner en productivité tout en garantissant la sécurité dans l'usine ou l'entrepôt, et ce pour un coût raisonnable, puisqu'on ajouter des éléments à un chariot existant sans apporter de modifications substantielles à l'architecture de base du chariot.

De manière générale, l'ensemble des fonctionnalités qui viennent d'être décrites sous forme de modules peuvent être découpées physiquement d'une façon différente et gérées par des électroniques mutualisées ou distinctes.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre un schéma bloc d'un système de commande selon l'invention,
- La figure 2 permet de détailler le fonctionnement du module de commutation d'un système selon l'invention.

### DESCRIPTION DU MEILLEUR MODE DE REALISATION DE L'INVENTION

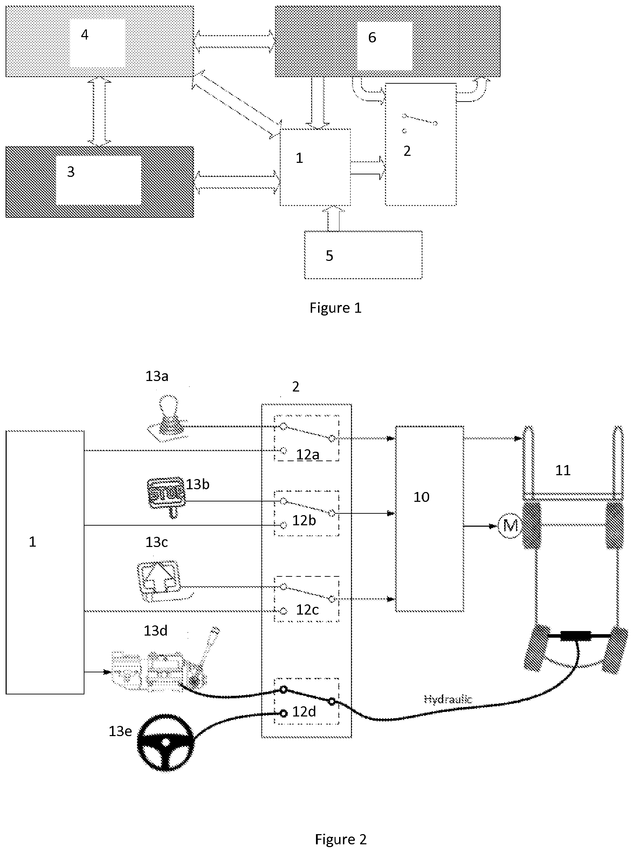

La figure 1 montre un module de commande 1 qui comprend un ensemble de circuits électroniques permettant de générer des signaux de pilotage autonome ou des signaux de pilotage manuels corrigés.

Les signaux de pilotage ainsi générés sont transmis au module de commutation 2 qui sélectionne les signaux à transmettre effectivement aux actionneurs du véhicule. Ce module de commutation sera décrit en détail à l'aide de la figure 2.

Le module de commande 1 reçoit en entrée des signaux de consigne issus du module de navigation 3. Ces signaux de consigne comprennent notamment un signal de vitesse et un signal d'angle de direction pour le chariot qui se transcrit en signal d'actionnement du volant. Les signaux de consigne comprennent également des signaux pour la gestion des fourches, notamment la hauteur, l'inclinaison et l'écartement des fourches.

Le module de navigation 3 comprend des moyens de géolocalisation, et comprend également une mémoire dans laquelle est stockée une cartographie du lieu dans lequel le chariot est destiné à évoluer, par exemple une usine ou un entrepôt. La cartographie peut être chargée directement dans la mémoire en provenance d'une source externe, mais elle peut également être établie directement par le module de navigation par apprentissage lors des premiers déplacements du chariot dans un lieu à cartographier.

Le module de navigation comprend en outre des moyens de réception de données issues d'un serveur distant, par exemple par Wi-Fi. Ces données reçues correspondent à des missions à effectuer par le chariot, et comprennent par exemple l'identification d'itinéraires à effectuer, ou de marchandises à charger et décharge. Pour ce faire, le module de navigation 3 reçoit également des informations du module de détection 4. Ce module de détection permet par exemple d'informer le module de navigation quant à la présence d'obstacles dans l'environnement du chariot, ou encore de la position des fourches.

Ce module de détection 4 communique également directement avec le module de commande 1, par exemple pour corriger des consignes de pilotage en fonction de paramètres extérieurs qui n'auraient pas été pris en compte par le module de navigation, et qui peuvent mettre en cause la sécurité du chariot ou des opérateurs.

Le module de commande 1 reçoit également des informations d'un ensemble de capteurs 5, par exemple des capteurs permettant de détecter une anomalie au niveau du chargement. A réception de ce type d'informations, une procédure d'arrêt d'urgence du chariot put alors être activée. Cette procédure d'urgence consiste, par exemple, à agir en série sur un bouton d'arrêt d'urgence initialement présent sur le chariot élévateur, et qui a pour conséquence la coupure de l'alimentation du chariot, et l'arrêt du chariot par un relâchement de la pression sur les freins multidisques. Ainsi, la procédure d'urgence agit exactement comme si un opérateur avait appuyé sur le bouton d'urgence.

Nous allons maintenant décrire en détail le module de commutation à l'aide de la figure 2. Ce module de commutation est connecté à l'interface électrique 10 du chariot 11. Cette interface est celle originellement présente sur le chariot 11, et elle est reliée à l'ensemble des actionneurs et des capteurs originellement présent sur le chariot.

Le module de commutation est relié à un sélecteur installé sur le chariot, et qui permet de choisir le mode de fonctionnement.

Le module de commutation comprend un ensemble de commutateurs 12a, 12b, 12c.... qui permettent de commuter entre les signaux issus directement des organes à commande humaine, et les signaux issus du module de commande 1.

On voit ainsi un commutateur pour les manettes 13a du chariot, qui permettent de choisir le sens de la marche du chariot, et également de piloter le fonctionnement des fourches en mode manuel.

On voit également un commutateur pour la pédale de frein 13b, un pour la pédale d'accélérateur 13c, et un pour le volant 13e.

On constate sur cette figure que le cas du volant est particulier, puisque les signaux électriques de pilotage de l'angle de direction doivent être transformés en signaux hydrauliques et transmis directement au chariot 11 par une connexion hydraulique. Pour ce faire, un système de commande selon l'invention comprend avantageusement une vanne hydraulique permettant la transformation des signaux.

Selon le mode de fonctionnement choisi, à l'aide d'un sélecteur installé dans le véhicule, un ou plusieurs de ces éléments sont activés ou désactives, de la façon suivante :

### Module de commutation en mode manuel :

- Module de commande : désactivé
- Module de navigation : désactivé
- Module de détection : désactivé
- Procédure d'arrêt d'urgence : activée
- Dans ce cas, le module de commutation sélectionnera les signaux issus directement des organes humains pour les transmettre à l'interface électrique 10. Les commutateurs seront donc dans la position montrée en figure 2.

### Module de commutation en mode manuel à sécurisation assistée :

- Module de commande : activé
- Module de navigation : désactivé
- Module de détection : activé
- Procédure d'arrêt d'urgence : activée
- Dans ce cas, le module de commutation sélectionnera les signaux manuels, corrigés en fonction des informations issues du module de détection. Les commutateurs seront donc dans la position montrée en figure 2.

### Module de commutation en mode manuel à navigation assistée :

- Module de commande : activé
- Module de navigation : activé
- Module de détection : désactivé
- Procédure d'arrêt d'urgence : activée
- Dans ce cas, le module de commutation sélectionnera les signaux manuels, corrigés en fonction des informations issues du module de navigation. Les commutateurs seront donc dans la position montrée en figure 2.

### Mode tout-autonome

- Module de commande : activé
- Module de navigation : activé
- Module de détection : activé
- Procédure d'arrêt d'urgence : activée
- Dans ce cas, le module de commutation sélectionnera les signaux autonomes issus du module de commande 1.

A la lecture de cette description, on constate qu'un système selon l'invention est très facile à installer sur un chariot élévateur existant, puisque les modules additionnels viennent s'interfacer aisément sur l'architecture électrique et électronique existantes. En outre, un tel système de commande tire avantageusement partie des capteurs, boutons, sélecteurs ... déjà présents sur le chariot, réduisant encore les coûts induits par l'équipement de chariots existants.

De manière générale, un système selon l'invention permet de transformer facilement et à des coûts modérés un chariot élévateur manuel en chariot élévateur autonome, tout en respectant les contraintes de sécurité dues à l'environnement spécifique dans lequel sont amenés à évoluer de tels chariots.

## Revendications

1. Système de commande d'un chariot (11) élévateur, comportant :
- Des organes de commande humaine générant des signaux de pilotage manuel d'actionneurs du véhicule, ces organes comprenant une direction hydraulique,
- Un module de commande (1) comprenant un sous-module de commande automatique générant des signaux de pilotage autonome à destination d'un ou plusieurs actionneurs du véhicule, en fonction de signaux de consigne,
- Un module de commutation (2) agencé pour sélectionner un ou des signaux de pilotage manuels et/ou un ou des signaux de pilotage autonome,
- une vanne électrohydraulique permettant la transformation d'un signal de pilotage issu du sous- module de commande automatique #t en un signal à destination de la direction hydraulique,
le système étant **caractérisé en ce qu'**il comprend en outre un régulateur d'asservissement de la vanne électrohydraulique comprenant un régulateur Proportionnel-Intégral, un régulateur Tout-Ou-Rien et des moyens d'activation de l'un ou l'autre des régulateurs PI et TOR en fonction d'un seuil de vitesse du chariot élévateur.

2. Système de commande selon la revendication 1, dans lequel le seuil de vitesse est fixé à 2m/s.

3. Système de commande selon l'une des revendications précédentes, comprenant en outre :
- Un module de détection (4) de l'environnement du véhicule,
- Un module de navigation (3) permettant de générer des signaux de consigne de pilotage en fonction d'une instruction reçue,
et dans lequel
- Le module de commande (1) comprend un sous-module de commande assistée générant des signaux de pilotage manuels corrigés en fonction des signaux de pilotage manuels et des informations issues du module de détection (4) et/ou des signaux de consigne de pilotage, et
- le module de commutation (2) est en outre agencé pour sélectionner des signaux manuels corrigés.

4. Système de commande selon la revendication 3, dans lequel le module de commutation (2) sélectionne les signaux de pilotage en fonction de quatre modes de fonctionnement :
- Un mode manuel dans lequel seuls les signaux manuels sont sélectionnés,
- Un mode tout-automatique dans lequel seuls les signaux autonomes sont sélectionnés,
- Un mode manuel à sécurisation assistée, dans lequel sont sélectionnés les signaux de pilotage manuels corrigés par les informations issues du module de détection,
- Un mode manuel à navigation assistée, dans lequel sont sélectionnés les signaux de pilotage manuel corrigés par les signaux de consigne de pilotage.

5. Système selon la revendication 3 ou 4, dans lequel le module de commutation (2) permet également de choisir un mode maintenance, dans lequel l'ensemble des éléments du système de commande, à l'exception des organes à commande humaine, sont désactivés.

6. Système de commande selon l'une des revendications précédentes, dans lequel le module de navigation (3) comprend des moyens de télécommunications avec un ordinateur distant.

7. Système de commande selon la revendication 6, dans lequel le module de navigation (3) comprend en outre des moyens de géolocalisation.

8. Système de commande selon la revendication 4 ou 5, dans lequel les signaux de consigne de pilotage comprennent une consigne de vitesse, une consigne d'angle de rotation des roues du chariot, une consigne d'élévation des fourches, une consigne d'angle d'inclinaison des fourches, une consigne d'écartement des fourches.

9. Système de commande selon l'une des revendications précédentes, dans lequel le module de détection (4) de l'environnement comprend un sous-module de gestion des fourches, comprenant :
- Des capteurs de détection de la présence de chargement sur les fourches,
- Des capteurs de position des fourches.

10. Système de commande selon la revendication 9, dans lequel le sous-module de gestion des fourches comprend des moyens pour détecter une incohérence au niveau du chargement des fourches, et pour émettre un signal d'arrêt en cas d'incohérence.

11. Système de commande selon l'une des revendications précédentes, dans lequel le module de détection (4) de l'environnement comprend un sous-module de détection des zones de protection, comprenant au moins un laser permettant de détecter la présence d'un obstacle dans une zone environnant le véhicule.

12. Système de commande selon l'une des revendications précédentes, dans lequel les organes de commande humaine sont compris dans le groupe comprenant : une pédale d'accélérateur (13c), une pédale de frein (13b), un volant (13e), un sélecteur de sens de marche du véhicule, une manette (13a) de commande de l'élévation, de l'inclinaison et de l'écartement des fourches.

13. Chariot (11) élévateur comprenant un système de commande selon l'une des revendications précédentes.

## Patentansprüche

1. Steuerungssystem für einen Gabelstapler (11), aufweisend:
- Organe zur menschlichen Steuerung, die Signale zur manuellen Ansteuerung von Aktoren des Fahrzeugs erzeugen, wobei diese Organe eine hydraulische Lenkung umfassen,
- ein Steuerungsmodul (1), das ein Submodul zur automatischen Steuerung umfasst, das Signale zur autonomen Ansteuerung, die an einen oder mehrere Aktoren des Fahrzeugs gerichtet sind, in Abhängigkeit von Sollwertsignalen erzeugt,
- ein Umschaltmodul (2), das dazu eingerichtet ist, ein oder mehrere manuelle Ansteuerungssignale und/oder ein oder mehrere Signale zur autonomen Ansteuerung zu wählen,
- ein elektrohydraulisches Ventil, das die Umwandlung eines aus dem Submodul zur automatischen Steuerung stammenden Ansteuerungssignals in ein an die hydraulische Lenkung gerichtetes Signal ermöglicht, wobei das System **dadurch gekennzeichnet ist, dass** es ferner einen Nachführregler für das elektrohydraulische Ventil umfasst, der einen Proportional-Integral-Regler, einen Zweipunktregler und Mittel zum Aktivieren des einen oder des anderen der PI- und Zweipunktregler in Abhängigkeit von einem Geschwindigkeitsschwellenwert des Gabelstaplers umfasst.

2. Steuerungssystem nach Anspruch 1, bei dem der Geschwindigkeitsschwellenwert auf 2 m/s festgelegt ist.

3. Steuerungssystem nach einem der vorhergehenden Ansprüche, umfassend ferner:
- ein Detektionsmodul (4) zur Detektion der Umgebung des Fahrzeugs,
- ein Navigationsmodul (3), das es ermöglicht, Ansteuerungssollwertsignale in Abhängigkeit von einer empfangenen Anweisung zu erzeugen,
und bei dem
- das Steuerungsmodul (1) ein Submodul zur unterstützten Steuerung umfasst, das korrigierte manuelle Ansteuerungssignale in Abhängigkeit von den manuellen Ansteuerungssignalen und den aus dem Detektionsmodul stammenden Informationen und/oder den Ansteuerungssollwertsignalen erzeugt, und
- das Umschaltmodul (2) ferner dazu eingerichtet ist, korrigierte manuelle Signale auszuwählen.

4. Steuerungssystem nach Anspruch 3, bei dem das Umschaltmodul (2) die Ansteuerungssignale in Abhängigkeit von vier Betriebsmodi auswählt:
- einem manuellen Modus, in dem nur die manuellen Signale ausgewählt werden,
- einem vollautomatischen Modus, in dem nur die autonomen Signale ausgewählt werden,
- einem manuellen Modus mit unterstützter Sicherung, in dem die durch die aus dem Detektionsmodul stammenden Informationen korrigierten manuellen Ansteuerungssignale ausgewählt werden,
- einem manuellen Modus mit unterstützter Navigation, in dem die durch die Ansteuerungssollwertsignale korrigierten Signale zur manuellen Ansteuerung ausgewählt werden.

5. System nach Anspruch 3 oder 4, bei dem das Umschaltmodul (2) es auch ermöglicht, einen Wartungsmodus zu wählen, in dem sämtliche Elemente des Steuerungssystems, mit Ausnahme der Organe mit menschlicher Steuerung, deaktiviert sind.

6. Steuerungssystem nach einem der vorhergehenden Ansprüche, bei dem das Navigationsmodul (3) Mittel zur Telekommunikation mit einem entfernten Computer umfasst.

7. Steuerungssystem nach Anspruch 6, bei dem das Navigationsmodul (3) ferner Geolokalisierungsmittel umfasst.

8. Steuerungssystem nach Anspruch 4 oder 5, bei dem die Ansteuerungssollwertsignale einen Geschwindigkeitssollwert, einen Drehwinkelsollwert der Räder des Staplers, einen Hubsollwert der Gabeln, einen Neigungswinkelsollwert der Gabeln, einen Spreizungssollwert der Gabeln umfassen.

9. Steuerungssystem nach einem der vorhergehenden Ansprüche, bei dem das Detektionsmodul (4) zur Detektion der Umgebung ein Submodul zur Verwaltung der Gabeln umfasst, umfassend:
- Sensoren zur Detektion des Vorhandenseins von Ladung auf den Gabeln,
- Positionssensoren der Gabeln.

10. Steuerungssystem nach Anspruch 9, bei dem das Submodul zur Verwaltung der Gabeln Mittel umfasst, um eine Inkohärenz auf Ebene der Ladung der Gabeln zu detektieren und um im Inkohärenzfall ein Stoppsignal auszusenden.

11. Steuerungssystem nach einem der vorhergehenden Ansprüche, bei dem das Detektionsmodul (4) zur Detektion der Umgebung ein Submodul zur Detektion der Schutzbereiche umfasst, das mindestens einen Laser umfasst, der es ermöglicht, das Vorhandensein eines Hindernisses in einem das Fahrzeug umgebenden Bereich zu detektieren.

12. Steuerungssystem nach einem der vorhergehenden Ansprüche, bei dem die Organe zur menschlichen Steuerung in der Gruppe inbegriffen sind, die umfasst: ein Gaspedal (13c), ein Bremspedal (13b), ein Lenkrad (13e), einen Fahrtrichtungswähler des Fahrzeugs, einen Joystick (13a) zur Steuerung des Hebens, der Neigung und der Spreizung der Gabeln.

13. Gabelstapler (11), der ein Steuerungssystem nach einem der vorhergehenden Ansprüche umfasst.

## Claims

1. Control system for a fork-lift (11), comprising :
- Human control units generating manual control signals for vehicle actuators, these units comprising a hydraulic steering system,
- A control module (1) comprising an automatic control sub-module generating autonomous control signals for one or more vehicle actuators, as a function of setpoint signals,
- A switching module (2) designed to select one or more manual control signals and/or one or more autonomous control signals,
- An electrohydraulic valve for transforming a control signal from the automatic control sub-module into a signal for the hydraulic steering system,
the system being **characterized in that** it also comprises a servo controller for controlling the electrohydraulic valve, comprising a Proportional-Integral controller, an On/Off controller and means for activating one or other of the PI and On/Off controllers as a function of a forklift speed threshold.

2. A control system according to claim 1, in which the speed threshold is set at 2m/s.

3. A control system according to any of the preceding claims, further comprising:
- A vehicle environment detection module (4),
- A navigation module (3) for generating steering instruction signals according to a received instruction,
and wherein
- the control module (1) comprises an assisted control sub-module generating corrected manual steering signals as a function of the manual steering signals and information from the environment detection module (4) and/or the steering instruction signals, and
- the switching module (2) is further arranged to select corrected manual signals.

4. A control system according to claim 3, wherein the switching module (2) selects the control signals according to four operating modes:
- A manual mode in which only manual signals are selected,
- An all-automatic mode in which only autonomous signals are selected,
- A manual mode with assisted safety, in which manual control signals corrected by information from the detection module are selected,
- A manual mode with assisted navigation, in which manual steering signals corrected by steering instruction signals are selected.

5. A control system as claimed in claim 3 or 4, in which the switching module (2) can also be used to select a maintenance mode, in which all the elements of the control system, with the exception of human-operated units, are deactivated.

6. A control system according to one of the preceding claims, in which the navigation module (3) comprises means for telecommunications with a remote computer.

7. A control system as claimed in claim 6, wherein the navigation module (3) further comprises geolocation means.

8. A control system as claimed in claim 4 or 5, wherein the control instruction signals comprise a speed instruction, a forklift wheel rotation angle instruction, a fork elevation instruction, a fork inclination angle instruction and a fork spacing instruction.

9. A control system according to any of the preceding claims, wherein the environment detection module (4) comprises a fork management sub-module, comprising:
- Sensors for detecting the presence of load on the forks,
- Fork position sensors.

10. A control system of claim 9, wherein the fork management sub-module comprises means for detecting incoherence in fork loading, and for issuing a stop signal in the event of incoherence.

11. A control system according to one of the preceding claims, in which the environment detection module (4) comprises a protection zones detection sub-module, comprising at least one laser for detecting the presence of an obstacle in a zone surrounding the vehicle.

12. A control system according to one of the preceding claims, in which the human control units are included in the group comprising: an accelerator pedal (13c), a brake pedal (13b), a steering wheel (13e), a vehicle travel direction selector, a joystick (13a) for controlling the elevation, inclination and spacing of the forks.

13. Forklift truck (11) comprising a control system according to one of the preceding claims.
